# EUROPEAN PATENT APPLICATION

(11) **EP 4 692 763 A1**
(43) Date of publication of application: **11.02.2026**
(21) Application number: 25184349.6
(22) Date of filing: 23.06.2025
(51) Int. Cl.: G01N 21/25, G01N 21/64, G01N 21/76, B01L 3/00

(54) **AUXILIARY MEMBER THAT IS ATTACHABLE TO AND DETACHABLE FROM A VESSEL AND OBSERVATION METHOD OF OBSERVING A BIOLOGICAL SAMPLE CONTAINED IN A VESSEL**

(30) Priority: 06.08.2024 JP 2024129870
(71) Applicant: SCREEN Holdings Co., Ltd., Kyoto-shi, Kyoto 602-8585 (JP)
(72) Inventor: KAMIMURA, Yoshifumi, Kyoto, 602-8585 (JP)
(74) Representative: Goddar, Heinz J.

(57) **Abstract**

An auxiliary member (1) that is attachable to and detachable from a vessel (9) including a compartment (90) whose bottom surface (91) has a light transmission effect and whose wall surface (92) has a light-blocking effect is used to perform fluorescence imaging or luminescent measurement on biological samples contained in the compartment (90). The auxiliary member (1) includes a light-blocking portion (11) that adheres to the bottom surface (91) when the auxiliary member (1) is fitted to the vessel (9). Accordingly, cell observation using transmitted light can be performed when the auxiliary member (1) is not fitted to the vessel (9), and precise fluorescence/luminescence observation can be performed when the auxiliary member (1) is fitted to the vessel (9). That is, it is possible to achieve both cell observation using transmitted light and precise fluorescence/luminescence observation when fluorescence imaging or luminescent measurement is performed on biological samples such as cells.

## Description

### BACKGROUND OF THE INVENTION

### Field of the Invention

The present invention relates to an auxiliary member and an observation method, the auxiliary member being a member attached to a vessel that holds therein biological samples together with a culture solution, the observation method being a method of observing the biological samples by using the vessel and the auxiliary member.

### Description of the Background Art

Conventionally, fluorescence imaging or luminescent measurement is performed as a method of observing or measuring cells. For example, Japanese Patent Application Laid-Open No. 2009-543048 describes a conventional multi-well plate having a plurality of compartments for holding biological samples.

Fluorescence imaging involves, for example, performing immunostaining using antibodies and fluorescent materials and detecting fluorescence to confirm the presence or absence of target proteins or the like. Luminescent measurement is measurement using chemiluminescence and is performed traditionally. For example, when luciferin serving as the substrate for luciferase is added to cells having luciferase genes transduced therein, a reaction of luciferin and adenosine triphosphate (ATP) existing in living cells is caused by luciferase that is an enzyme to yield oxyluciferin. Since the oxyluciferin yielded by this reaction continues to emit light in order to stabilize energy, it is possible to check ATP activity in the cells by measuring the amount of light emission.

If a transparent vessel is used to perform observation or measurement under fluorescent conditions or luminescent conditions as described above, fluorescent light or luminescent light diffuses in multiple directions through the vessel and makes accurate measurement difficult. Thus, in the observation or measurement of fluorescent light or luminescent light, it is preferable that samples may be contained in an opaque vessel. For example, a well plate for fluorescence imaging may have compartments whose bottoms and wall surfaces are both formed of a black material in order to suppress intrinsic fluorescence. A well plate for luminescent measurement may, for example, have compartments whose bottoms and wall surfaces are formed of a white material in order to make it easier to collect light in the case of measuring the amount of light emission from above the well plate. However, ordinary bright-field observation using transmitted light cannot be performed by using such opaque vessels.

In view of this, well plates having compartments whose wall surfaces are opaque and whose bottom surfaces are transparent have been sold in recent years. This allows bright-field observation using transmitted light, and the opaque wall surfaces reduces the diffusion of fluorescent light or luminescent light. However, this is not enough when fluorescence light or luminescent light has low intensity. For example, accurate measurement may be difficult to achieve when precise measurement is required with a small amount of light emission and under conditions of limited biological samples such as patient specimens.

### SUMMARY OF THE INVENTION

### Technical Problem

The present invention has been made in light of such circumstances, and it is an object of the present invention to provide a technique that achieves both cell observation using transmitted light and precise fluorescence/luminescence observation in the case of performing fluorescence imaging or luminescent measurement on biological samples such as cells.

In order to solve the problem described above, a first aspect of the present application is an auxiliary member that is attachable to and detachable from a vessel having a compartment whose bottom surface has a light transmission effect and whose wall surface has a light-blocking effect. The auxiliary member includes a light-blocking portion that adheres to the bottom surface when the auxiliary member is fitted to the vessel.

A second aspect of the present application is the auxiliary member according to the first aspect, in which the vessel includes a plurality of compartments each serving as the compartment, and the light-blocking portion adheres to the bottom surfaces of all of the plurality of compartments.

A third aspect of the present application is the auxiliary member according to the first aspect that further includes a notch arranged in an edge portion located outward of the light-blocking portion. The notch fits in a rib that is provided in the vessel and that protrudes downward.

A fourth aspect of the present application is an observation method of observing a biological sample contained in a vessel including a compartment whose bottom surface has a light transmission effect and whose wall surface has a light-blocking effect. The observation method includes a) fitting an auxiliary member to the vessel, the auxiliary member including a light-blocking portion that adheres to the bottom surface, and b) performing fluorescence imaging or luminescent measurement on a biological sample contained in the vessel having the auxiliary member fitted thereto.

A fifth aspect of the present application is the observation method according to the fourth aspect, in which the operation a) includes a1) placing the auxiliary member on an upper surface of a mounting jig, a2) lowering the vessel from above the auxiliary member and the mounting jig to press the bottom surface of the vessel against the auxiliary member and to fit the auxiliary member to the vessel, and a3) raising the vessel to space the vessel having the auxiliary member fitted thereto from the mounting jig.

According to the first to fifth aspects of the present application, the use of the auxiliary member and the vessel including the compartments whose bottom surfaces have a light transmission effect and whose wall surfaces have a light-blocking effect makes it possible to achieve both cell observation using transmitted light and precise fluorescence/luminescence observation on the biological samples held in the compartments.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a well plate and an auxiliary member according to a first embodiment.
Fig. 2 is a perspective view of the well plate and the auxiliary member according to the first embodiment.
Fig. 3 is a sectional view showing a condition in which the auxiliary member is attached to the well plate according to the first embodiment.
Fig. 4 is a sectional view showing a condition in which the auxiliary member is attached to the well plate according to the first embodiment.
Fig. 5 is a flowchart showing a procedure of sample observation using the well plate and the auxiliary member according to the first embodiment.
Fig. 6 is a graph showing experimental results.
Fig. 7 is a sectional view of a well plate and an auxiliary member according to a second embodiment.

### DESCRIPTION OF THE PREFERRED EMBODIMENTS

Preferable embodiments of the present invention are described hereinafter with reference to the drawings.

### 1. First Embodiment

### 1-1. Configurations of Well Plate and Auxiliary Member

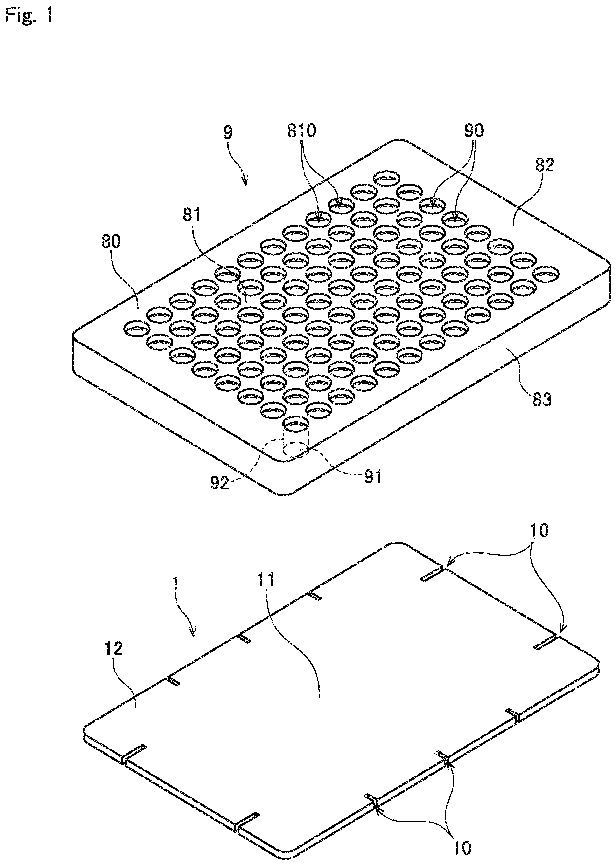

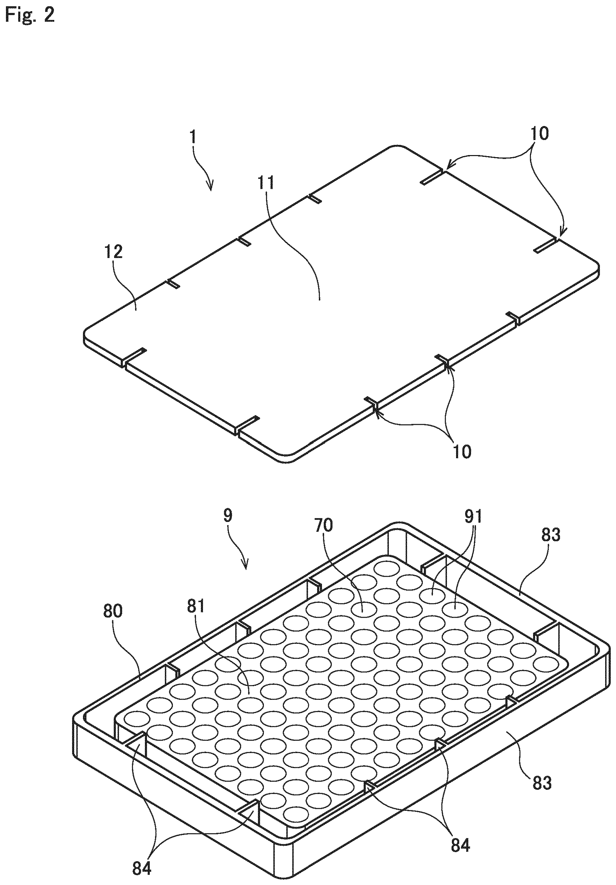

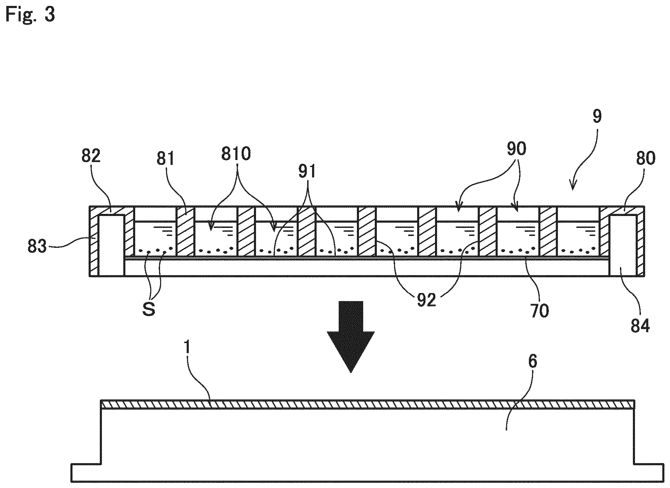

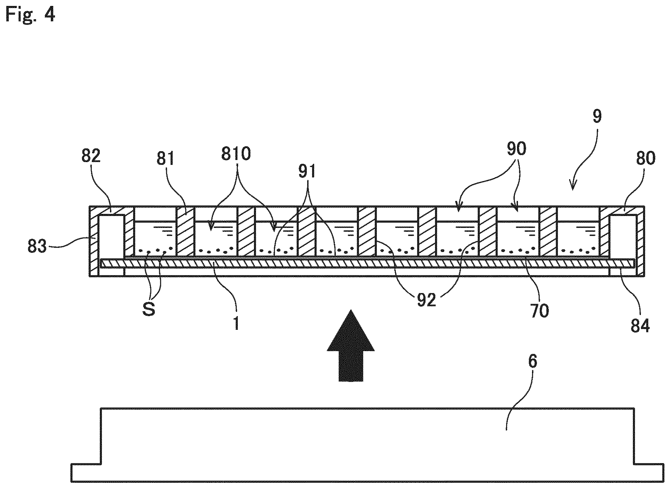

Figs. 1 and 2 are perspective views of an auxiliary member 1 and a well plate 9 to which the auxiliary member 1 is attached, according to a first embodiment. Figs. 3 and 4 are sectional views showing a condition in which the auxiliary member 1 is attached to the well plate 9.

The well plate 9 is a vessel for containing and holding biological samples. The well plate 9 is an approximately plate-like vessel having a plurality of wells 90. The wells 90 are recesses and serve as compartments that contain and hold biological samples. As shown in Fig. 1, the wells 90 are regularly arranged in the upper surface of the well plate 9. In the present embodiment, the wells 90 have a circular shape when viewed from above. However, the shape of the wells 90 when viewed from above may be any other shape such as a rectangle. Each well 90 has a light-transmittable bottom surface 91 and a light-blocking wall surface 92.

The well plate 9 includes a first member 80 formed of a resin having a light-blocking effect and a second member 70 having a sheet-like shape and formed of a transparent resin that allows passage of light.

The first member 80 includes a body portion 81, an upper plate portion 82, a side plate portion 83, and a plurality of ribs 84. The body portion 81 is a plate-like portion that is thick in the up-down direction. The body portion 81 has a thickness that is the same as the internal height of the wells 90. The body portion 81 has a plurality of cylindrical through holes 810 that configure the wells 90. The internal spaces of these through holes 810 correspond to the internal spaces of the wells 90, and the inner peripheral surfaces of the through holes 810 correspond to the wall surfaces 92 of the wells 90.

The sheet-like second member 70 is affixed to the bottom surface of the body portion 81 as shown in Fig. 3. Thus, the second member 70 serves as the light-transmittable bottom surface 91 of each well 90.

The upper plate portion 82 is a plate-like portion that expands outward from the upper edge of the body portion 81. The upper plate portion 82 has a smaller thickness than the body portion 81. The upper surface of the body portion 81 and the upper surface of the upper plate portion 82 configure the upper surface of the well plate 9 that expands horizontally.

The side plate portion 83 is a tubular portion that extends downward from the outer edge of the upper plate portion 82. Each of the ribs 84 is a plate-like portion that is approximately perpendicular to the upper plate portion 82 and the side plate portion 83. That is, the ribs 84 protrude downward from the lower surface of the upper plate portion 82 and also protrude inward from the inner surface of the side plate portion 83. In the present embodiment, there are ten ribs 84, three for each long side of the well plate 9 and two for each short side thereof.

As shown in Figs. 3 and 4, each well 90 holds therein biological samples S to be observed, together with a culture solution. Accordingly, the biological samples S are incubated inside each well 90. The biological samples S may be single cells. Alternatively, the biological samples S may be cell clusters such as spheroids or organoids that are each formed of a plurality of cells. The biological samples S may also be tissues from a living body or part of the tissues.

The auxiliary member 1 is a plate-like member. The auxiliary member 1 is formed of a resin having a light-blocking effect. The color of the auxiliary member 1 may, for example, be white or black. Note that the color of the auxiliary member 1 may preferably be the same as the color of the side wall surfaces 92 of the well plate 9. The auxiliary member 1 is fitted to the well plate 9 so that the upper surface of the auxiliary member 1 comes in contact with the lower surface of the body portion 81 of the well plate 9.

The auxiliary member 1 includes a light-blocking portion 11 and an edge portion 12. The light-blocking portion 11 is a portion that adheres to the bottoms of the wells 90 when fitted to the well plate 9. That is, the light-blocking portion 11 is a portion that overlaps with the body portion 81 when the auxiliary member 1 is fitted to the well plate 9. The edge portion 12 is a portion located outward of the light-blocking portion 11. The edge portion 12 has a plurality of notches 10. That is, the notches 10 are arranged outside the light-blocking portion 11. When the auxiliary member 1 is fitted to the well plate 9, the notches 10 fit in the ribs 84. This allows the auxiliary member 1 to be held on the underside of the well plate 9 and not to fall off even if the well plate 9 having the auxiliary member 1 fitted thereto is lifted up.

### 1-2. Sample Observation Using Auxiliary Member

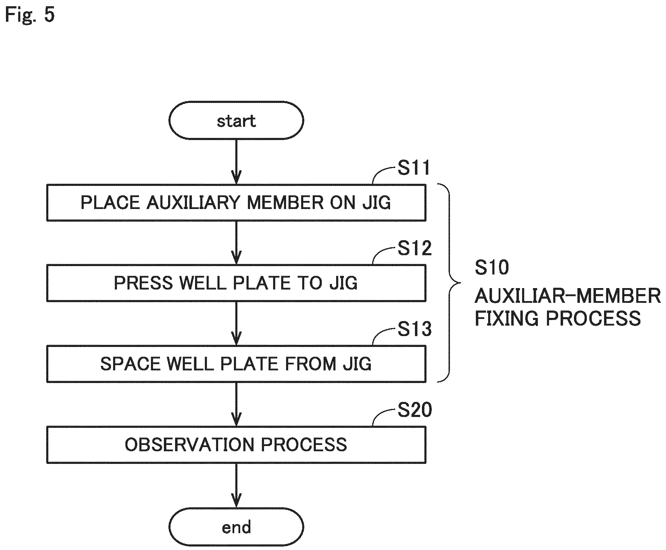

Next, a procedure of sample observation processing using the well plate 9 and the auxiliary member 1 is described with reference to Figs. 3 to 5. Fig. 5 is a flowchart showing a procedure of the sample observation processing using the well plate 9 and the auxiliary member 1.

As shown in Fig. 5, when fluorescence imaging or luminescent measurement is performed on samples, firstly, the auxiliary member 1 is fitted to the well plate 9 (auxiliary-member fitting process in step S10). Then, with the auxiliary member 1 fitted to the well plate 9, fluorescence imaging or luminescent measurement is performed on biological samples contained in each well 90 of the well plate 9 (observation process in step S20).

When the auxiliary member 1 is fitted to the well plate 9 in step S10, it is necessary to fit the auxiliary member 1 with no deviation to the underside of the well plate 9 without inclining the well plate 9. For this reason, a mounting jig 6 may be used as shown in Figs. 3 and 4.

In that case, firstly, the auxiliary member 1 is placed on the upper surface of the mounting jig 6 as shown in Fig. 3 (step S11). Then, the well plate 9 is lowered from above the auxiliary member 1 and the mounting jig 6 so as to press the bottom surface of the well plate 9, i.e., the bottom surfaces of the wells 90, against the auxiliary member 1 and to fit the auxiliary member 1 to the well plate 9 (step S12). Specifically, the ribs 84 are inserted into the notches 10, so that the ribs 84 are fitted in the notches 10 and the upper surface of the auxiliary member 1 adheres to the bottom surfaces of the wells 90.

Thereafter, as shown in Fig. 4, the well plate 9 is raised so that the well plate 9 having the auxiliary member 1 fitted thereto is spaced from the mounting jig 6 (step S13). In this way, the auxiliary member 1 is fitted to the well plate 9 by using the mounting jig 6. This allows the auxiliary member 1 to be fitted to the well plate 9 while stably maintaining the orientation of the well plate 9. That is, it is possible to avoid a situation in which the orientation of the well plate 9 may become unstable and the biological samples or a medium held inside each well 90 may spill out of the well 90.

In this way, the auxiliary member 1 that can adhere to the bottom surfaces of the wells 90 is attachable to and detachable from the well plate 9 having the wells 90 whose bottom surfaces are transparent. Accordingly, when the auxiliary member 1 is not fitted to the well plate, cell observation using transmitted light can be performed on the biological samples held in the wells 90, and when the auxiliary member 1 is fitted to the well plate, precise fluorescence/luminescence observation can be performed on the biological samples held in the wells 90.

### 1-3. Effect of Auxiliary Member: Luminescent Measurement Experiment

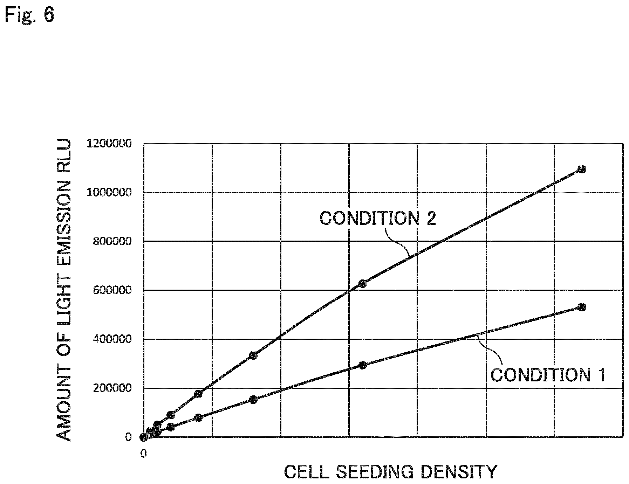

Next, advantageous effects of the auxiliary member 1 are verified by performing a luminescent measurement experiment on cells. Fig. 6 is a graph showing the results of the luminescent measurement experiment described hereinafter.

Samples that are observed in this experiment are obtained by adding a reagent for luminescent measurement CellTiter-Glo (registered trademark) to CHO-K1 cells that are a commercially available cell line. A well plate having a shape similar to that of the well plate 9 according to the first embodiment is used as a vessel in which samples are contained. Using the samples, the amount of light emission is measured for each of a plurality of cell seeding densities under conditions 1 and 2 described below.
Condition 1: The wells have colorless and transparent bottom surfaces.
Condition 2: A white sheet is affixed to the bottom surfaces of the wells.

Condition 1 described above uses a commercially available well plate as-is. This well plate has a white wall surface and a colorless and transparent bottom surface. Condition 2 is that a white sheet is affixed to the bottom surfaces of the wells of a well plate that is of the same type as the well plate used under Condition 1. That is, Condition 2 is a condition that is closely analogous to the case where the auxiliary member 1 according to the first embodiment is attached to the transparent bottom surfaces of the wells.

The result of this experiment shows that, if the cell seeding density is the same, about a double of the amount of light emission obtained under Condition 1 was measured under Condition 2 as shown in Fig. 6. That is, it can be said that, if an opaque material adheres to the bottom surfaces of the wells, precise fluorescence/luminescence observation can be performed on the biological samples held in the compartments. It is assumed that similar effects can also be achieved with the use of the auxiliary member 1.

### 2. Second Embodiment

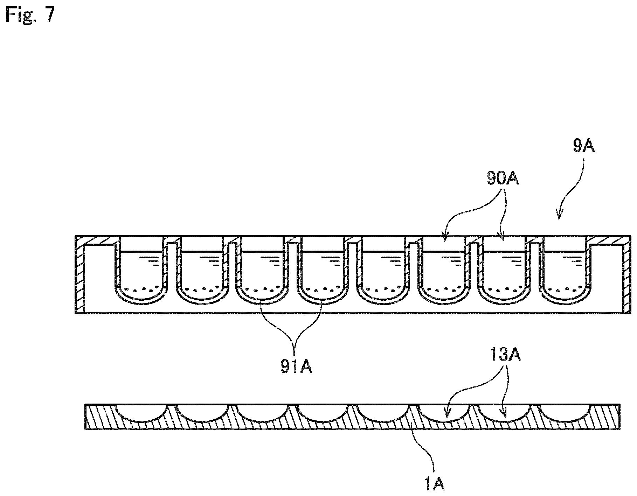

Fig. 7 is a sectional view of a well plate 9A and an auxiliary member 1A according to a second embodiment. In the first embodiment, each well 90 of the well plate 9 has a flat bottom surface. In contrast, each well 90A of the well plate 9A according to the second embodiment has a curved transparent bottom surface 91A.

The auxiliary member 1A according to the second embodiment is a plate-like member that has a thickness greater than the height of the curved bottom surfaces of the wells 90A. The upper surface of the auxiliary member 1A has a plurality of recesses 13A that are shaped along the curved bottom surfaces 91A of the wells 90A. Thus, when the auxiliary member 1A is fitted to the well plate 9A, the curved surface configuring each recess 13A adheres to the bottom surface 91A of each well 90A. That is, the curved surface configuring the recesses 13A of the auxiliary member 1A serves as the light-blocking portion that adheres to the transparent bottom surfaces 91A of the wells 90A.

In this way, the wells 90A do not necessarily have to have a flat plate-like bottom surface. The shape of the light-blocking portion of the auxiliary member 1A may become deformed as appropriate depending on the shape of the bottom surfaces of the wells 90A.

### 3. Variations

While embodiments of the invention have been described thus far, the present invention is not limited to the embodiments described above.

In the first embodiment described above, each well 90 of the well plate 9 has a circular shape when viewed from above. However, the shape of each well 90 when viewed from above may be any other shape such as a rectangle with rounded corners.

The above embodiments have described the well plate 9 that includes the plurality of wells 90. However, the sample vessel according to the present invention may be a laboratory dish (petri dish) or a flask that has only one compartment.

Each element in the embodiments and the variations described above may be appropriately combined within a range that presents no contradictions.

The configurations of the preferred embodiments and variations described above may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

## Claims

1. An auxiliary member (1) that is attachable to and detachable from a vessel (9) including a compartment (90) whose bottom surface (91) has a light transmission effect and whose wall surface (92) has a light-blocking effect, the auxiliary member (1) comprising:
a light-blocking portion (11) that adheres to the bottom surface (91) when the auxiliary member (1) is fitted to the vessel (9).

2. The auxiliary member (1) according to claim 1, wherein
the vessel (9) includes a plurality of compartments (90) each serving as the compartment (90), and
the light-blocking portion (11) adheres to the bottom surfaces (91) of all of the plurality of compartments (90).

3. The auxiliary member (1) according to claim 1 or 2, further comprising:
a notch (10) arranged in an edge portion (12) located outward of the light-blocking portion (11),
wherein the notch (10) fits in a rib (84) that is provided in the vessel (9) and that protrudes downward.

4. An observation method of observing a biological sample contained in a vessel (9) including a compartment (90) whose bottom surface (91) has a light transmission effect and whose wall surface (92) has a light-blocking effect, the observation method comprising:
a) fitting an auxiliary member (1) to the vessel (9), the auxiliary member (1) including a light-blocking portion (11) that adheres to the bottom surface (91); and
b) performing fluorescence imaging or luminescent measurement on a biological sample contained in the vessel (9) having the auxiliary member (1) fitted thereto.

5. The observation method according to claim 4, wherein
the operation a) includes:
a1) placing the auxiliary member (1) on an upper surface of a mounting jig (6);
a2) lowering the vessel (9) from above the auxiliary member (1) and the mounting jig (6) to press the bottom surface (91) of the vessel (9) against the auxiliary member (1) and to fit the auxiliary member (1) to the vessel (9); and
a3) raising the vessel (9) to space the vessel (9) having the auxiliary member (1) fitted thereto from the mounting jig (6).
